# EUROPEAN PATENT SPECIFICATION

(11) **EP 1 212 270 B1**
(45) Date of publication and mention of the grant of the patent: **16.06.2004**
(21) Application number: 00957180.3
(22) Date of filing: 21.08.2000
(51) Int. Cl.: C07B 63/04

(54) **USE OF CYCLODEXTRIN FOR PROTECTIVE STORAGE OF CHEMICAL COMPOUND LIBRARIES**
VERWENDUNG VON CYCLODEXTRINE ZUR GESCHÜTZTEN AUFBEWAHRUNG VON BIBLIOTHEKEN CHEMISCHER VERBINDUNGEN
UTILISATION DE LA CYCLODEXTRINE DANS LE STOCKAGE PROTEGE DES BIBLIOTHEQUES DE COMPOSES CHIMIQUES

(30) Priority: 24.08.1999 SE 9902988
(43) Date of publication of application: 12.06.2002
(73) Proprietor: AstraZeneca AB, 151 85 Södertälje (SE)
(72) Inventor: ARVIDSSON, Per-Ola, S-221 87 Lund (SE); DIVERS, Mark, S-221 87 Lund (SE); PETERSEN-MAHRT, Silja, S-221 87 Lund (SE)
(74) Representative: Giles, Allen Frank
(86) International application number: PCT/SE2000/001592
(87) International publication number: WO 2001/014291

(56) References cited:
- EP-A2- 0 609 766
- EP-A2- 0 947 820
- WO-A1-85/02767
- US-A- 5 580 856
- JOZEF SZEJTLI: 'Introduction and general overview of cyclodextrin chemistry' CHEM. REV. vol. 98, 1998, pages 1743 - 1753, XP002934526

## Description

The invention relates to cyclodextrin as a protective agent for compounds in compound libraries, particularly for use in screening the compound library for biological activity.

High Throughput Screening (HTS) is a process in which up to many thousands or more or chemical compounds are assayed in search of biological (or other) activity. Large libraries or chemical compounds are valuable assets of research organisations. Compound libraries are used in the search for agents with novel pharmaceutical, agrochemical or other fine chemical applications and are a valuable source of structural and chemical diversity used in identifying new leads as potential inhibitors of a particular target. Compound libraries may for example contain more than 100,000 different compounds and due to increasingly efficient compound acquisition, either through commercial sources, or by high throughput synthesis, compound libraries with more than 1 million different compounds are now of a typical size in some research organisations. There is a vast variety of targets, and an even greater variety of assay methods. The goal of HTS is to identify "actives", compounds that affect the target in some manner. There are a number of problems set out below which presently hinder the optimal operation of HTS.

The compounds available for testing are called the compound library. The compounds may be hydrophilic, lipophilic, reactive or light-sensitive. The compounds are stored in solution, usually DMSO or a mixture of DMSO and water, to be available for screening. The storage is long-term (e.g. up to 5 years) and the environmental conditions are very variable. Because of the large variety of properties in the compound library, the conditions for storage can not be adjusted to individual compounds and compromises are made to suit most of the compounds and the screening process. For the screening process, the individual compounds are transferred to reaction vessels (e.g. microtitre plates) in small (e.g. sub-microliter) quantities. For performing a biological assay, the compounds are diluted in aqueous solution while adding the biological material, for example enzymes, cells or membranes. A signal is measured, representing the individual biological activity of the compound on that particular target, usually relative to a control (e.g. the biological reaction without compounds).

Compromising on storage conditions and the choice of suitable solvent may disqualify many compounds even before they reach the biological assay system. Furthermore, even more compounds may never reach the biological target, because the addition of aqueous solution causes precipitation of molecules. There is currently no solution to this problem. Progress in screening technology i.e. moving into much smaller assay-volumes reveals another problem. Pipetting of sub-microliter quantities of chemical compounds is now possible, but it is very hard to keep the compounds solubilized, because the solvent rapidly evaporates. Most compounds are not easily resolubilized in aqueous solution once the organic solvent has evaporated and consequently the compound is not available to the biological target. The compromize of diluting in aqueous solution prior to the assay leaves one with the problem of precipitation.

High throughput multiple parallel synthesis (HTMPS) can generate very large numbers of individual compounds, typically 100-5000 per week, but the sample size is usually small, <100mg. Compounds from HTMPS are stored sometimes as dry films or as solutions, usually in dimethyl sulphoxide (DMSO). The dispensing of compounds stored as dry films is often very difficult, and the difficulty increases significantly as the sample size decreases. Compounds stored as solutions can be dispensed quickly and accurately, but some samples are unstable in solution and decompose on prolonged storage, even at low temperatures.

Increasingly the demands of a compound collection are changing. With the advent of high throughput screening (HTS) a whole compound collection of, for example, 100,000 compounds may be screened in a number of days against a new biological target, using automated or semi-automated procedures. Faced with the need for more rapid dispensing of compounds from the compound collection, the small sample size needed and the large numbers of different sample types existing in a compound collection, current systems of storage and dispensing are increasingly incompatible with modem needs.

Much of the developing new technology in drug discovery is focussing on miniaturisation. Along with many big advantages offered by miniaturisation technologies, come the problems of compounds drying out of solution (due to the evaporation of sub-microlitre volumes of solvent) and exposure of compound solutions to aqueous conditions before the screening (which can lead to precipitation of the compounds out of solution). These problems could prevent the screening of many compound classes, and therefore restrict the benefit of HTS in discovering compounds with useful biological activity.

After the priority date of the present invention, a European patent application from Evotec BioSystems GmbH published on 60ct1999 as EP 947820. This Evotec publication includes use of cyclodextrins as additives for compound storage.

The present invention is based on the discovery that cyclodextrins can be used as a universal additive to compounds in a compound library to overcome at least some of the problems set out above.

According to one aspect of the present invention there is provided a compound library wherein each compound within the library is stored in wet form in the presence of a cyclodextrin wherein the cyclodextrin concentration is 20-200mM. The number of compounds in a compound library which may be stored by the techniques as described herein is not limited by the invention, ideally the invention may be used for storage of compounds in compound libraries where the number of different compounds stored is more than 100, preferably more than 300, preferably more than 10³, preferably more than 3000, preferably more than 10⁴, preferably more than 30000, preferably more than 10⁴ ,preferably more than 10⁵, especially more than 10⁶. Addition of compounds to the library that do not contain cyclodextrin is intended to be within the scope of the present invention provided the library sizes set out above are met with compounds that do contain cyclodextrin.

Preferred compounds are those stored in compound libraries of pharmaceutical, biotechnology or agrochemical companies. Preferred compounds are organic molecules of molecular weight of less than 2000 Daltons, and especially of 1000 Daltons or less.

Preferably the compounds within the library are selected from at least 3 chemical classes, more preferably at least 5 chemical classes, more preferably at least 7 chemical classes, more preferably at least 10 chemical classes, more preferably at least 30 chemical classes and especially at least 100 chemical classes. Examples of chemical classes include: acidic, basic and neutral compounds; aliphatic, aromatic and heteroaromatic compounds; carboxylic acids, sulphonic acids, esters, acid halides, amides, amidines, nitriles, aldehydes, ketones, alcohols, phenols, thiols, hydroperoxides, amines, imines, ethers, sulphides and peroxides; and any suitable combination or combinations thereof.

Preferably the cyclodextrin is present at a substantially uniform concentration across the library. A preferred concentration of cyclodextrin is 20-200mM, more preferably at 30-150mM, more preferably at 40-80mM and especially at 45-60mM, and especially at about 50 mM. It will be appreciated that these concentrations refer to the initial concentration upon preparation of a compound for addition to the library and that, over time, the concentration may increase due to evaporation. It will also be appreciated that for this reason, even when one concentration of cyclodextrin is selected initially, there may be variable concentrations present in the compound library depending on differences in storage time (and therefore extent of evaporation) for individual compounds. Compounds may be purposefully dried before storage or alternatively stored in wet form and natural evaporation (if any) allowed to occur on storage. The Evotec publication states that the compounds must be stored dry (see para 18 of Evotec and the claims).

For the sake of comparison with Evotec, the reader is referred to the following parts thereof which state certain additive concentrations.
para 24: hydroxypropyl-β-CD concentrations of 0.05-4% by weight, 0.05-2% and 0.1-1.5%
Example 1: hydroxypropyl-β-CD concentration of 1.5%.
Example 2: hydroxypropyl-β-CD concentration of 0.1 %.

A comparison of concentration units is presented below.

| hydroxypropyl-β-CD concentration (mM) | hydroxypropyl-β-CD concentration (% by weight) |
|---|---|
| 20-200 | 2.8-28 |
| 30-150 | 4.2-21 |
| 40-80 | 5.6-11.2 |
| 45-60 | 6.3-8.4 |
| 50 | 7 |

Therefore the stated additive concentrations herein are novel over Evotec.

One cyclodextrin or a mixture of cyclodextrins may be used, either within a single compound or across the library as a whole. An especially preferred cyclodextrin is 2-hydroxypropyl-b-CD.

According to another aspect of the present invention there is provided a method of preparing a compound library of the invention which comprises the addition of a cyclodextrin to each compound within the library. In one embodiment, the library may be stored in wet form.

According to another aspect of the present invention there is provided a method of screening a compound library of the invention which comprises assay of at least 100 compounds from the library in the presence of a cyclodextrin. Preferred assays include enzyme, receptor and cellular models.

The addition of CDs to compound libraries solves at least some of the problems faced with known compound libraries as described above. For example, we have discovered that many structurally different compounds within a compound library are protected against degradation and oxidation in the presence of CDs and they can be widely used to enhance solubility of molecules in aqueous solution. Furthermore compounds can be dried in the reaction vessel without loosing their biological activity. CD has not yet shown any effects on the biological systems tested: no inhibition or activation due to the CDs could be shown, and no side-effects on signal-detection have been observed so far. Furthermore, CD has not yet shown any negative effects on compound availability in any tested bioassay.

Without wishing to be bound by theoretical considerations, we believe that some of advantages of the invention may be due, at least in part, to the following properties of CDs. CDs are capable of forming inclusion complexes with drug molecules by taking up the molecules in their cavity. The inclusion complex is in equilibrium with the surrounding environment of water molecules, CD-molecules and free drug molecules. The compounds are readily released from the inclusion complex by dilution in aqueous solution, i.e displacing the equilibrium in favour of the free molecules. Formation and dissociation of the inclusion-complex is a rapid process, usually only minutes. For very hydrophobic compounds the equilibrium is first reached after hours or days. CDs are not only used to enhance solubility but also to stabilize compounds both in dry formulations and in solutions. CDs can prevent compounds from hydrolysis, oxidation and also photodestruction by protecting them from a potentially reactive environment. Cyclodextrins have been reviewed by Jozsef Szejtli in Chem. Rev. (1998), 98, 1743-53.

| **Abbreviations** | |
|---|---|
| CD | cyclodextrin |
| DMSO | dimethylsulphoxide |
| 2-HP-CD | 2-hydroxypropyl-b-cyclodextrin |
| HTMPS | high throughput multiple parallel synthesis |
| HTS | high throughput screening |
| OC | octylcycloside |
| OTGP | octylthioglucopyranoside |
| PEG | polyethyleneglycol |
| SDS | sodium dodecyl sulphate |

The invention will now be illustrated by the following non-limiting Examples in which:

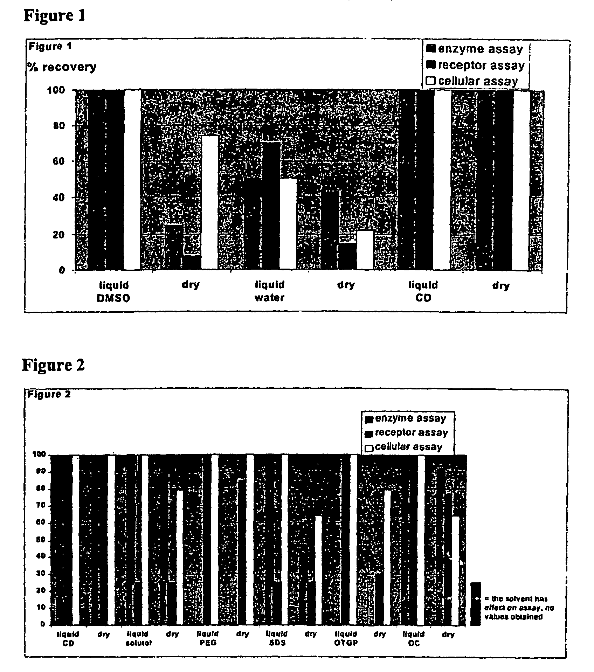

**Figure 1** shows the percentage of compounds retaining their biological activity after different treatments compared with the initial number of biologically active compounds (actives) in DMSO-solution. The compounds were dissolved in DMSO, water or cyclodextrin (40 mM) in DMSO, and used either in liquid or after the liquid has evaporated (dry). Three different assay-methods were used: *Enzyme assay.* Enzyme activity was monitored in an aqueous buffer system by absorbance changes. *Receptor assay:* binding of isotopically labelled ligand to membrane preparations in an aqueous buffer system was measured by scintillation. *Cellular assay:* A functional cell response was monitored after induction in aqueous medium by luminescence measurement.
**Figure 2** shows the percentage of compounds retaining their biological activity after different treatments compared to the initial number of biologically active compounds (actives) in Cyclodextrin-DMSO-solution (40mM). The compounds were dissolved in Solutol™-DMSO (0.1 mM), Polyethyleneglycol-DMSO (20%), SDS-DMSO (20 mM), Octyl-Thioglucopyranoside-DMSO (20 mM) and Octylcycloside-DMSO (50 mM) and used either in liquid or after the liquid has evaporated (dry). Solutol™ is sold by BASF as nonionic solubilizer in paste form for use in human and veterinary injections and is described in the BASF catalogue as "Solutol HS 15: macrogol-15 hydroxystearate produced by reacting 15 moles of ethyl oxide with 1 mole of 12-hydroxystearic acid". The same assays as in Example 1 were used.

### Example 1

### Compound accessibilty after drying and aqueous dilution.

A selection of 80 compounds of known biological activity and poor aqueous solubility were screened in 3 different biological systems (enzyme and receptor binding assays), in the presence and absence of cyclodextrin (40mM 2-HP-CD) in the organic solvent.

The enzyme assay was a peroxidase assay with a chromogenic substrate. The receptor assay was a G-protein coupled receptor assay performed as SPA™ (Amersham, scintillation proximity assay technology) with a membrane preparation linked to scintillant beads and a radiolabelled ligand. The cellular assay was a cytokine stimulated monocyte cell-line providing a measurable luminescent response.

The compounds were exposed to drying conditions and aqueous dilution (conditions which can cause precipitation of the compounds), and then tested in the biological assays, in a manner equivalent to the standard HTS process. The results are shown in Figure 1.

The findings are as follows:
Increased solubility in aqueous solutions, more compounds stay in solution without precipitating, resulting in more active compounds identified.
Conserved biological activity after drying in the reaction vessel: compounds that have shown activity on a certain target loose that activity if the compound dried out due to DMSO evaporation prior to the biological assay. When CD is present those active compounds keep their activity also after being dried.

### Several effects were demonstrated:

- Cyclodextrin itself did not affect the normal functioning of the biological assays tested.
- In the absence of cyclodextrin the drying conditions of the compounds cause loss of all or most of the biological activities caused by the compounds
- In the presence of cyclodextrin all of the known biological activities of the compounds were retained after the drying treatments.

### Example 2

### HTS experiments with 1600 compounds

1600 different compounds screened in the presence and absence of cyclodextrin (2-HP-CD, 50 mM). These experiments provided further confirmation of the preliminary observations, although this time with a larger number of compounds, not pre-selected for low solubility properties. The results were not as clear-cut as in the preliminary trials, but still very promising.

Firstly, the cyclodextrin did not adversely affect the biological assays, in common with the first trials. Further, it generally revealed more biological activity of the compounds than was seen without cyclodextrin after drying or aqueous dilution treatments, which could otherwise result in compound loss by precipitation.
Several effects were demonstrated:
Increased bioavailability of compounds for the target: Molecules that did not show activity in the absence of CD. can become active because the bioavailability is improved by CD, making for example lipophilic compounds soluble in aqueous solution.
Increased solubility in aqueous solutions, more compounds stay in solution without precipitating, thus resulting in more active compounds
Conserved biological activity if it is necessary to dilute compounds in aqueous solution prior to the asssay: compounds that have shown activity on a certain target may loose that activity due to precipitation if the compound is diluted in aqueous solution prior to the assay. When CD is present those compounds mostly keep their activity because precipitation is prevented.

### Comparative Example 1

### Comparison of Cyclodextrin with other possible protective agents

The same experimental setup as in Example 1 was used to compare the performance of cyclodextrin with other potential protective agents. None of the other agents showed the advantageous properties (e.g. biologically inert, protective in dry conditions) as well as cyclodextrin; see Figure 2.

The conclusion was that CD was by a large margin the best protective agent tested.

## Claims

1. A compound library wherein each compound within the library is stored in wet form in the presence of a cyclodextrin wherein the cyclodextrin concentration is 20-200mM.

2. A compound library according to claim 1 comprising at least 1000 compounds.

3. A compound library according to claim 1 comprising at least 10000 compounds.

4. A compound library according any preceding claim wherein the compounds are organic molecules of molecular weight of less than 2000 Daltons.

5. A compound library according to claim 4 wherein the compounds are organic molecules of molecular weight of less than 1000 Daltons.

6. A compound library according to any preceding claim wherein the cyclodextrin concentration is 30-150mM.

7. A compound library according to any preceding claim wherein the cyclodextrin concentration is 40-80mM.

8. A compound library according to any preceding claim wherein the cyclodextrin concentration is 45-60mM.

9. A compound library according to any preceding claim wherein the cyclodextrin concentration is 50mM.

10. A compound library according to any preceding claim wherein the cyclodextrin is 2-hydroxypropyl-b-cyclodextrin.

11. A method of preparing a compound library as defined in any of claims 1-10 which comprises the addition of a cyclodextrin to each compound within the library and storage of the compound library in wet form.

12. A method of screening a compound library as defined in any of claims 1-10 which comprises assay of at least 100 compounds from the library.

13. A method according to claim 12 in which the assay is selected from the group consisting of enzyme assay, receptor assay and cellular assay.

## Patentansprüche

1. Verbindungsbibliothek, wobei jede Verbindung in der Bibliothek jeweils in Nassform in Gegenwart eines Cyclodextrins aufbewahrt wird, wobei die Cyclodextrinkonzentration 20-200 mM beträgt.

2. Verbindungsbibliothek gemäß Anspruch 1 mit wenigstens 1000 Verbindungen.

3. Verbindungsbibliothek gemäß Anspruch 1 mit wenigstens 10.000 Verbindungen.

4. Verbindungsbibliothek gemäß einem der vorhergehenden Ansprüche, wobei es sich bei den Verbindungen um organische Moleküle mit einem Molekulargewicht von weniger als 2000 Dalton handelt.

5. Verbindungsbibliothek gemäß Anspruch 4, wobei es sich bei den Verbindungen um organische Moleküle mit einem Molekulargewicht von weniger als 1000 Dalton handelt.

6. Verbindungsbibliothek gemäß einem der vorhergehenden Ansprüche, wobei die Cyclodextrinkonzentration 30-150 mM beträgt.

7. Verbindungsbibliothek gemäß einem der vorhergehenden Ansprüche, wobei die Cyclodextrinkonzentration 40-80 mM beträgt.

8. Verbindungsbibliothek gemäß einem der vorhergehenden Ansprüche, wobei die Cyclodextrinkonzentration 45-60 mM beträgt.

9. Verbindungsbibliothek gemäß einem der vorhergehenden Ansprüche, wobei die Cyclodextrinkonzentration 50 mM beträgt.

10. Verbindungsbibliothek gemäß einem der vorhergehenden Ansprüche, wobei es sich bei dem Cyclodextrin um 2-Hydroxypropyl-b-cyclodextrin handelt.

11. Verfahren zur Herstellung einer Verbindungsbibliothek nach einem der Ansprüche 1-10, bei dem jeweils ein Cyclodextrin zu jeder Verbindung in der Bibliothek gegeben und die Verbindungsbibliothek in Nassform aufbewahrt wird.

12. Verfahren zum Screening einer Verbindungsbibliothek nach einem der Ansprüche 1-10, bei dem wenigstens 100 Verbindungen aus der Bibliothek getestet werden.

13. Verfahren gemäß Anspruch 12, bei dem der Test ausgewählt ist aus der Gruppe bestehend aus Enzymtest, Rezeptortest und Zelltest.

## Revendications

1. Bibliothèque de composés, dans laquelle chaque composé dans la bibliothèque est stocké sous forme humide en présence d'une cyclodextrine, dans laquelle la concentration de cyclodextrine est de 20 à 200 mM.

2. Bibliothèque de composés selon la revendication 1, comprenant au moins 1 000 composés.

3. Bibliothèque de composés selon la revendication 1, comprenant au moins 10 000 composés.

4. Bibliothèque de composés selon l'une quelconque des revendications précédentes, dans laquelle les composés sont des molécules organiques de poids moléculaire inférieur à 2 000 daltons.

5. Bibliothèque de composés selon la revendication 4, dans laquelle les composés sont des molécules organiques de poids moléculaire inférieur à 1 000 daltons.

6. Bibliothèque de composés selon l'une quelconque des revendications précédentes, dans laquelle la concentration de cyclodextrine est de 30 à 150 mM.

7. Bibliothèque de composés selon l'une quelconque des revendications précédentes, dans laquelle la concentration de cyclodextrine est de 40 à 80 mM.

8. Bibliothèque de composés selon l'une quelconque des revendications précédentes, dans laquelle la concentration de cyclodextrine est de 45 à 60 mM.

9. Bibliothèque de composés selon l'une quelconque des revendications précédentes, dans laquelle la concentration de cyclodextrine est de 50 mM.

10. Bibliothèque de composés selon l'une quelconque des revendications précédentes, dans laquelle la cyclodextrine est une 2-hydroxypropyl-b-cyclodextrine.

11. Procédé de préparation d'une bibliothèque de composés selon l'une quelconque des revendications 1 à 10, qui comprend l'ajout d'une cyclodextrine à chaque composé au sein de la bibliothèque et le stockage de la bibliothèque des composés sous forme humide.

12. Procédé de criblage de la bibliothèque de composés selon l'une quelconque des revendications 1 à 10, qui comprend une analyse d'au moins 100 composés à partir de la bibliothèque.

13. Procédé selon la revendication 12, dans lequel l'analyse est sélectionnée dans le groupe comprenant l'analyse enzymatique, l'analyse du récepteur et l'analyse cellulaire.
